Europäisches Patentamt

European Patent Office

Office européen des brevets

(11) Numéro de publication: **0 205 386**

**A1**

# DEMANDE DE BREVET EUROPEEN

(21) Numéro de dépôt: **86401246.3**

(22) Date de dépôt: **10.06.86**

(51) Int. Cl.⁴: **F 16 F 15/22**

(30) Priorité: **12.06.85 FR 8508857**

(43) Date de publication de la demande:
**17.12.86 Bulletin 86/51**

(84) Etats contractants désignés:
**DE GB IT NL SE**

(71) Demandeur: **AUTOMOBILES PEUGEOT**
**75, avenue de la Grande Armée**
**F-75116 Paris(FR)**

(71) Demandeur: **AUTOMOBILES CITROEN**
**62 Boulevard Victor-Hugo**
**F-92200 Neuilly-sur-Seine(FR)**

(71) Demandeur: **REGIE NATIONALE DES USINES RENAULT**
**Boîte postale 103 8-10 avenue Emile Zola**
**F-92109 Boulogne-Billancourt(FR)**

(71) Demandeur: **S.C.R.E.B.**
**27-29, rue Parmentier**
**F-92000 Nanterre(FR)**

(71) Demandeur: **RENAULT VEHICULES INDUSTRIELS**
**Société Anonyme dite:**
**129 rue Servient "La Part Dieu"**
**F-69003 Lyon(FR)**

(72) Inventeur: **Ahmed, Afif**
**22, rue des Frères Blais**
**F-94200 Ivry Sur Seine(FR)**

(72) Inventeur: **Brille, Maurice**
**27-29, Rue Parmentier**
**F-92000 Nanterre(FR)**

(74) Mandataire: **Réal, Jacques**
**Régie Nationale des Usines Renault SCE 0804**
**F-92109 Boulogne Billancourt Cedex(FR)**

(54) **Dispositif d'équilibrage général pour moteurs axiaux ou à barillet.**

(57) Suivant l'invention, ce dispositif d'équilibrage général destiné à un moteur à barillet (0) à assiette pivotante (1), comprend:

    un contrepoids extérieur (19) lié à un volant (20);
    un contrepoids extérieur (22) lié à une poulie avant;
    un contrepoids intérieur (14) fixé sur un vilebrequin (3);
    et un contrepoids intérieur (8) lié à une assiette (1).

*Application* : notamment à l'équilibrage d'un moteur axial au moyen de contrepoids.

EP 0 205 386 A1

./...

FIG.1

# DISPOSITIF D'EQUILIBRAGE GENERAL POUR MOTEURS AXIAUX OU A BARILLET.

La présente invention se rapporte à un dispositif d'équilibrage destiné aux moteurs axiaux ou à barillet.

Elle vise plus particulièrement un contrepoids supplémentaire lié à la fois, mais de manières différentes, au vilebrequin et à l'assiette pivotante d'un moteur axial en vue, d'une part, de réduire le travail des pièces à fortes contraintes et d'autre part, de maintenir l'équilibrage précis du moteur malgré un déplacement axial éventuel de l'assiette et de l'équipage bielles-pistons qui lui est attaché.

Cette invention s'applique particulièrement au moteur axial couvert par les brevets d'une des sociétés demanderesses (S.C.R.E.B) et spécialement le brevet FR 2.505 398.

Ce brevet FR 2.505 398 montre par rapport aux précédents, une disposition comportant un véritable vilebrequin à un coude au lieu d'une simple manivelle, et un deuxième palier placé de l'autre côté du maneton par rapport à un premier palier.

Ce deuxième palier se trouve ainsi à l'intérieur de l'assiette femelle qui effectue autour de lui son mouvement connu, lui-même étant placé à l'extrémité du support central fixe en rotation, susceptible d'un léger mouvement de translation qui entraîne l'assiette et l'ensemble des pistons afin de réaliser la variation du rapport de compression, lorsqu'il y a lieu.

Non seulement cette disposition permet de diminuer très notablement la longueur du moteur, mais par la réaction sur le deuxième palier en question, - que cette réaction provienne de la charge du maneton ou du contrepoids de vilebrequin -, elle crée un moment de sens horlogique sur le support, s'opposant presque totalement au moment de ~~sens~~ trigonométrique créé sur ce même support par les réactions de l'assiette sur les pistes (ou les cônes) d'appui, ce qui permet de garder un taux de travail très faible à l'emplanture de ce support central.

Cependant cette disposition ne change pas la valeur des réactions sur les pistes ni la pression de Hertz supportée par ces pistes. D'autre part, indépendamment des considérations précédentes, se pose dans tous les cas, une question d'équilibrage général du moteur. On sait que dans un moteur de ce genre, le couple d'inertie tournant de l'assiette peut toujours être équilibré exactement par un jeu de contrepoids tournants fixés en divers points de l'axe moteur. Si l'on a, en plus, une force d'inertie tournante - et c'est le cas ici puisque le centre de gravité de l'assiette est sur son axe propre à une certaine distance radiale de l'axe moteur - on peut donc encore réaliser un équilibrage exact bien que plus complexe.

Mais si le centre de gravité de l'assiette se déplace parallèlement à l'axe moteur, l'équilibrage exact n'est plus possible par des contrepoids liés rigidement à l'axe moteur - et c'est le cas ici - En fait, l'équilibrage exact ne peut être obtenu que pour une valeur donnée du rapport de compression. On peut évidemment trouver un optimum procurant un équilibrage très approché pour les autres valeurs de ce rapport. Mais dans la recherche des hauts régimes, c'est un inconvénient qui n'est plus négligeable.

Le contrepoids supplémentaire proposé par l'invention permet d'obvier à cet inconvénient. Il est monté et fixé sur la pièce dénommée "cavalier" par son côté léger, son côté lourd étant opposé au cavalier. Ce cavalier, comme son nom l'indique, est à cheval sur le dos du coude unique de vilebrequin tout en étant centré et ajusté par l'extérieur dans la bague intérieure du roulement maneton, lequel a sa bague extérieure ajustée dans l'assiette. Ce contrepoids, comme le cavalier, participe au mouvement de rotation du vilebrequin, mais ils peuvent tous deux ensemble se déplacer par rapport au vilebrequin en restant cependant dans le plan du coude comme un cavalier humain reste dans le plan médian de son cheval tout en pouvant décoller de la selle dans le plan vertical pendant le trot enlevé, ou se déplacer dans le plan horizontal vers l'avant ou l'arrière de la selle à l'occasion de manoeuvres diverses.

De même, ici, lorsque l'assiette tend à s'appuyer sur la piste extérieure, elle peut se soulever légèrement avec le cavalier et le contrepoids par rapport au dos du coude. De même, lorsque l'assiette et tout l'équipage qui la porte se déplacent longitudinalement lors de la variation du rapport de compression, le cavalier et son contrepoids glissent le long des parois du coude de vilebrequin.

La masse du contrepoids a ainsi une position fixe par rapport au centre de gravité de l'assiette (qui se trouve sur l'axe de l'assiette lorsqu'il n'y a pas de contrepoids) et se compose avec la masse de l'assiette en déplaçant le centre de gravité de l'ensemble assiette/contrepoids vers l'axe du vilebrequin. La masse du contrepoids est choisie pour que ce centre de gravité approche de très près ledit axe sans toutefois le toucher et encore moins le dépasser.

L'ensemble : masse de l'assiette (concentrée en son centre de gravité), axe de l'assiette, cavalier et contrepoids tourne bien autour de l'axe du vilebrequin donc du moteur, mais comme le rayon de giration du centre de gravité résultant est presque nul, il n'y a plus de force centrifuge correspondante, donc plus d'effort radial à composer avec les autres forces combinées pour l'équilibrage général, quel que soit le déplacement longitudinal de l'assiette qui n'intervient plus dans l'équilibrage général que par un moment, c'est-à-dire indépendamment de sa position longitudinale. On a ainsi annulé l'influence de la variation du rapport de compression sur l'équilibrage, ce qui est un des buts de l'invention.

Mais il se trouve que le susdit moment est dans le sens horlogique, c'est-à-dire opposé au moment de sens trigonométrique créé par l'inertie de l'équipage mobile pistons-assiette, lequel sollicite très fortement les appuis de l'assiette. Il s'en soustrait donc, et reste proportionnel ; il procure ainsi un soulagement constant aux appuis de l'assiette quel que soit l'angle de rotation du vilebrequin, ce qui est un autre but de l'invention.

L'invention sera mieux comprise à la lecture de la description qui suit d'un mode de réalisation préféré, donné à titre d'exemple non limitatif en référence aux dessins annexés dans lesquels :

- la figure 1 est une coupe longitudinale partielle du moteur incorporant ce dispositif d'équilibrage principal, suivant AA, montrant la position des quatre contrepoids nécessaires à son équilibrage dont le contrepoids d'assiette, objet principal de l'invention ;

- la figure 2 est une coupe transversale du même moteur par un plan perpendiculaire à son axe suivant BB. Elle montre en particulier ce contrepoids d'assiette, le contrepoids de vilebrequin et leur pénétration réciproque ;

- et la figure 3 est une coupe orthogonale du cavalier porteur du contrepoids d'assiette.

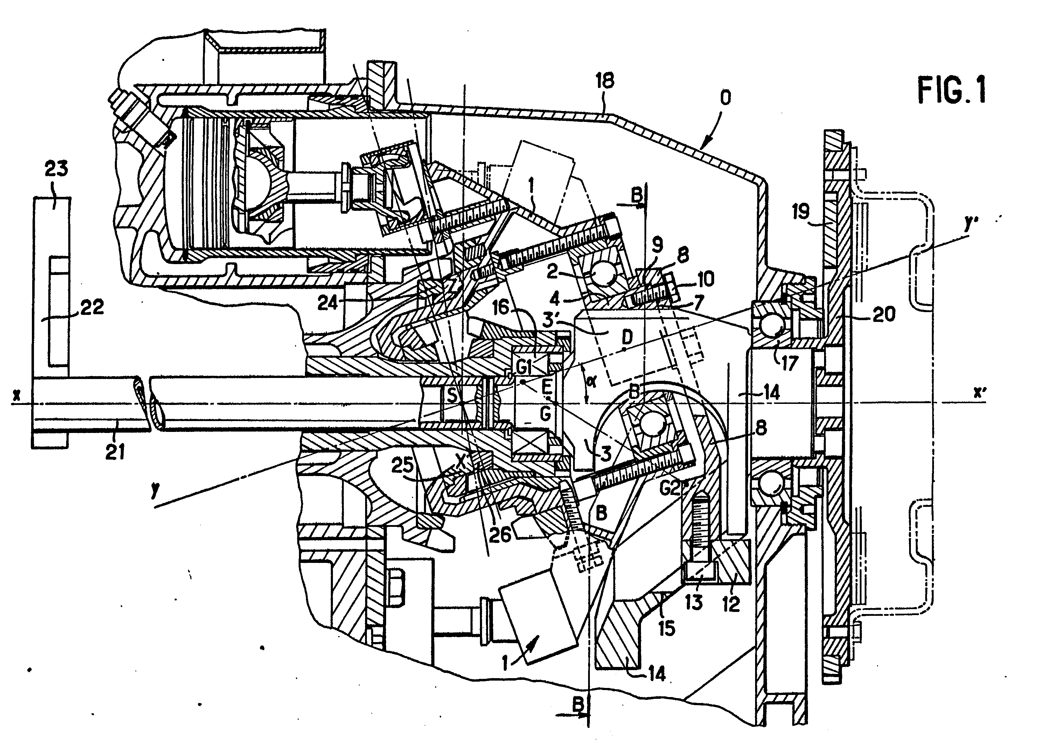

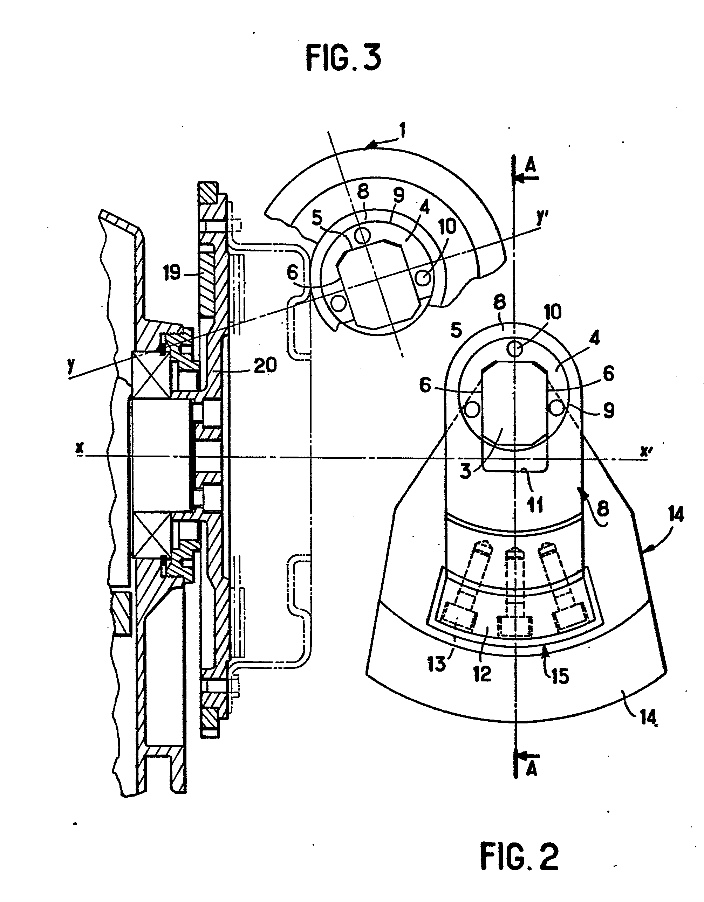

Conformément à ces figures 1, 2 et 3, un moteur axial 0 comporte une assiette 1 d'axe YY', lequel coupe l'axe XX' du moteur en un point S suivant l'angle $\alpha$ . L'axe YY', donc l'assiette toute entière, tourne autour de XX' à partir du pivot S, à vitesse $\omega$ correspondant au régime du moteur, mais l'assiette ne tourne pas autour de son axe YY'. A l'extrémité droite de l'assiette 1, se trouve un roulement à billes 2 faisant office du maneton dont le centre D est sur l'axe YY'. Ce roulement 2 ne porte pas directement sur le coude 3' d'un vilebrequin 3, mais par l'intermédiaire d'un cavalier 4 qui appuie sur le dos du vilebrequin 3 par une surface plane 5 parallèle à l'axe XX' et perpendiculaire au plan de la figure 1. Il est ajusté latéralement sur le vilebrequin 3 par deux faces planes 6 parallèles à XX' et parallèles au plan de la figure 1. Le jeu entre les faces 6 est maintenu aussi faible que possible. Par contre, le cavalier ne se referme pas à la partie inférieure autour du coude 3' et ne s'appuie pas non plus sur tout le pourtour de la bague intérieure du roulement 2. De ce fait, tout en restant solidaire de l'assiette, il peut avec elle se soulever et décoller la face 5 du dos 3 et il peut subir, toujours avec l'assiette, une translation suivant XX' en glissant sur les faces 6, lequel glissement permet également dans le sens perpendiculaire le soulèvement précité. Sur la face arrière 7 du cavalier 4, plane et perpendiculaire à YY', est monté le contrepoids d'assiette 8 ajusté par un centrage 9 et fixé par trois vis 10. Il possède une ouverture de dégagement oblongue 11 ayant suffisamment de jeu pour qu'il ne soit nulle part en contact avec le vilebrequin.

A sa partie inférieure opposée à l'axe YY' est fixé un balourd 12 par plusieurs vis 13 et ceci le plus à droite possible (dans la figure 1) pour autant que le permet le jeu nécessaire avec la paroi du carter arrière.

Ce contrepoids 8 et son balourd rapporté 12 traversent un contrepoids de vilebrequin 14, par une fenêtre 15. En effet, si le contrepoids d'assiette 8-12 doit être le plus à droite possible dans la figure 1 comme il est dit ci-dessus, le vilebrequin 14 doit être le plus à gauche possible de façon à charger plus fortement le palier intérieur 16 du moteur que le palier de volant 17. Cette dernière disposition tend à annuler le moment résultant sur le moignon support du palier 16 comme cela est expliqué dans le brevet FR 2.505 398 ainsi que dans l'introduction de la présente demande, et aussi réduit le travail du carter 18 qui porte le palier 17, ce travail pouvant être ramené à une très faible valeur par l'influence symétrique d'un contrepoids 19 placé dans le volant 20 du moteur à 180° du contrepoids 14. Un quatrième contrepoids 22 avec son balourd 23 est fixé à l'extrémité 21 de l'arbre prolongeant le vilebrequin 3.

Le fonctionnement du dispositif d'équilibrage précédemment décrit est le suivant.

L'attention se porte principalement sur l'influence du contrepoids d'assiette 8-12.

L'assiette 1, sans le cavalier 4 ni le contrepoids 8-12, mais avec le roulement 2, est symétriquement autour de son axe YY'.

Son centre de gravité est sur cet axe au point G1.

Le cavalier 4 et le contrepoids 8-12, solidement fixés l'un par rapport à l'autre par les trois vis 10, constituent un solide dont le centre de gravité est en G2 situé dans le plan X' S Y' qui est le plan de symétrie de ce solide en même temps que celui de l'assiette. Le roulement 2 ajusté sur l'assiette 1 et sur le cavalier 4 empêche, dans ce plan X' S Y', tout mouvement relatif de l'assiette 1 et du solide 4, 8-12. La droite G1 G2 a donc une longueur fixe ainsi qu'une position fixe dans ce plan et coupe l'axe XX', qui s'y trouve lui-même, en un point E. Les deux centres de gravité G1 et G2 se composent sur cette droite en un centre de gravité résultant G. La valeur du balourd 12 du contrepoids 8 est calculée pour que G se situe légèrement à gauche du point E à 1 mm au maximum de l'axe XX'.

Dans ces conditions, la force d'inertie tournante de l'ensemble assiette-contrepoids 1/4, 8-12 autour de l'axe XX' a une valeur insignifiante, de sorte que, quelle que soit la valeur de la translation de cet ensemble suivant XX', elle n'intervient plus dans l'équilibrage du moteur.

Mais comme elle n'est pas tout à fait nulle, le contact Z de l'assiette 1 avec la piste de guidage 24 est conservé, aussi faible soit-il.

En conclusion, l'équilibrage du moteur pourra être réalisé normalement par des contrepoids situés dans des plans transversaux fixes tels que 14, 19 et 22, tout en permettant la variation éventuelle du rapport de compression.

Mais, en même temps que l'assiette 1 a un moment d'inertie de sens trigonométrique, autour de l'axe perpendiculaire au plan de la figure 1 passant par S, le contrepoids 8-12 a un moment d'inertie de sens horlogique autour du même axe toujours dans le plan de la figure 1. Le moment résultant est donc la différence des valeurs absolues de ces deux moments, mais toujours de sens trigonométrique, le premier restant prépondérant, mais diminué de quelque 30 %, ce qui soulage de façon importante la force d'appui X entre les pistes inférieures 25 et 26.

Il est évident qu'on souhaiterait soulager X beaucoup plus en augmentant le balourd 12 mais on est limité de deux façons :

a) - par la considération précédente qui veut que G ne passe pas au-dessous de XX', donc que G2 soit déterminé en conséquence, ce qui laisse très peu de liberté pour le choix de la valeur du balourd 12. Le compromis consiste à pousser le balourd 12 le plus à droite possible pour augmenter son moment par rapport à S ; ce qui est fait et qui justifie cette disposition indiquée dans la description.

b) - même si on faisait litière de cette considération, par exemple si le rapport de compression restait fixe, l'augmentation du balourd 12 ferait croître la charge du roulement 2, par l'intermédiaire du cavalier 4, au-delà des limites admissibles.

## REVENDICATIONS

1. Dispositif d'équilibrage général destiné notamment à un moteur à barillet (0) à assiette pivotante (1), caractérisé en ce qu'il comprend :

- un contrepoids extérieur (19) lié à un volant (20) ;
- un contrepoids extérieur (22) lié à une poulie avant ;
- un contrepoids intérieur (14) fixé sur le vilebrequin (3) ;
- et un contrepoids intérieur (8) lié à une assiette (1).

2. Dispositif d'équilibrage général suivant la revendication 1, caractérisé en ce que le contrepoids de vilebrequin (14) est placé le plus loin possible d'un palier arrière (17), sa position n'étant limitée vers l'avant que par le débattement de l'assiette (1) - ceci afin de charger au maximum un deuxième palier (16) - et de décharger corrélativement le palier arrière (17).

3. Dispositif d'équilibrage général suivant la revendication 1 ou 2, caractérisé en ce que le contrepoids (8) dit d'assiette est lié au roulement-maneton (2) de l'assiette (1) par l'intermédiaire d'un cavalier (4) auquel il est fixé par des vis (10), lequel cavalier par son montage coulissant sur le coude (3') du vilebrequin (3) autorise un déplacement radial par rapport à ce vilebrequin de l'ensemble assiette-cavalier-contrepoids, l'axe de l'assiette étant toujours dans le plan de symétrie commun du cavalier et du vilebrequin, le but principal du contrepoids d'assiette étant de créer dans ce plan, un moment de sens inverse du moment d'inertie de l'assiette, de s'en soustraire donc, de façon à soulager d'autant les appuis roulants de l'assiette.

4. Dispositif d'équilibrage général suivant l'une quelconque des revendications 1, 2 et 3, caractérisé en ce que le contrepoids d'assiette (8) et son balourd (12) traversent par une fenêtre (15), avec des jeux suffisants, le voile porteur du contrepoids de vilebrequin (14), lequel doit

- 9 -                              0205386

être le plus à gauche possible dans le plan de la figure 1, alors que le balourd du contrepoids d'assiette doit y être le plus à droite possible pour réaliser le moment négatif maximal.

5. Dispositif d'équilibrage général suivant l'une quelconque des revendications 1 à 4, caractérisé en ce que le rapport de compression est rendu variable par translation longitudinale de l'assiette et de son équipage de pistons, avec coulissement longitudinal simultané du cavalier sur le coude du vilebrequin, entraînant le contrepoids d'assiette (8) qui lui est lié, avec nécessité pour la fenêtre du voile du contrepoids de vilebrequin (14) d'autoriser sans interférence le déplacement relatif de ce contrepoids d'assiette.

0205386

**FIG.1**

0205386

FIG. 3

FIG. 2

**0205386**
Numéro de la demande

**RAPPORT DE RECHERCHE EUROPEENNE**

Office européen
des brevets

EP 85 40 1246

## DOCUMENTS CONSIDERES COMME PERTINENTS

| | Catégorie | Citation du document avec indication, en cas de besoin, des parties pertinentes | Revendication concernée | CLASSEMENT DE LA DEMANDE (Int. Cl.4) |
|---|---|---|---|---|
| 1 | A | FR-A-2 372 996 (BOSSHARD) <br> * En entier * | 1 | F 16 F 15/22 |
| 1 | A | FR-A- 977 024 (DEVILLERS) <br> * En entier * | 1 | |
| 1 | A | SU-A- 175 283 (PETROV) <br> * Résumé * | 1 | |
| 3 | A | GB-A-1 093 496 (BUNYAN) <br> * Figure 4; page 2, lignes 56-70 * | 1 | |
| 3 | A | GB-A- 190 401 (ALMEN) <br> * Page 4, lignes 104-123 * | 1 | |
| 3 | A | FR-A-2 253 921 (ROGOJEW) | | **DOMAINES TECHNIQUES RECHERCHES (Int. Cl.4)** |
| | D,A | FR-A-2 505 398 (BRILLE) | | F 16 F <br> F 01 B <br> F 02 B |

-----

Le présent rapport de recherche a été établi pour toutes les revendications

| Lieu de la recherche | Date d achèvement de la recherche | Examinateur |
|---|---|---|
| LA HAYE | 08-08-1986 | DICKINSON D.J. |